# FASCICULE DE BREVET EUROPEEN

(11) **EP 1 854 390 B1**
(45) Date de publication et mention de la délivrance du brevet: **07.04.2010**
(21) Numéro de dépôt: 07356052.6
(22) Date de dépôt: 19.04.2007
(51) Int. Cl.: A47J 43/07

(54) **Pied de mixage muni d'une cloche de protection de forme particulière et mixeur ménager muni d'un tel pied de mixage**
Mixfuß mit einer Schutzglocke besonderer Form und Haushaltsmixgerät mit einem solchen Mixfuß
Mixing base equipped with a protective cover with a specific shape and domestic mixer equipped with such a mixing base

(30) Priorité: 03.05.2006 FR 0603943
(43) Date de publication de la demande: 14.11.2007
(73) Titulaire: SEB S.A., 69130 Ecully (FR)
(72) Inventeur: Lecerf, Joël, 50190 Periers (FR); Balan, Lionel, 50000 Saint Lô (FR)
(74) Mandataire: Kiehl, Hubert

(56) Documents cités:
- EP-A1- 0 324 115
- US-B1- 6 523 990

## Description

La présente invention concerne le domaine technique général des mixeurs ménagers du type plongeant et se rapporte plus particulièrement à un pied de mixage destiné à broyer des matières alimentaires immergées dans un liquide. De tels pieds de mixage sont bien connus et utilisés couramment. Ils sont accouplés à un boîtier renfermant un moteur et comprennent un fût cylindrique dont la partie inférieure comporte une cloche renfermant un outil de mixage solidaire d'un arbre dont l'extrémité supérieure est accouplée à un arbre de sortie du moteur. Entraîné à grande vitesse, l'outil est plongé à l'intérieur des aliments à préparer et il coupe, mélange, émulsionne, etc.

Il est connu, du document FR 2 625 427, un pied de mixage comportant un arbre excentré par rapport à la cloche de protection et une paroi de séparation s'étendant sous la cloche de protection divisant l'espace situé sous la cloche en une zone d'aspiration et une zone de refoulement. Un tel pied de mixage, muni d'une paroi de séparation en travers de la cloche, présente l'inconvénient de présenter une forme complexe relativement difficile à réaliser. De plus, la forme complexe de la cloche de protection complique le nettoyage.

L'invention qui suit vise à pallier ces inconvénients en proposant un pied de mixage de forme relativement simple, qui soit économique à réaliser et qui offre une grande efficacité de mixage des aliments.

Le but de l'invention est atteint par un pied de mixage comprenant une cloche de protection comportant une paroi périphérique délimitant une chambre de mixage autour d'un outil rotatif, l'outil rotatif étant solidaire d'un arbre traversant la cloche de protection et destiné à être entraîné par un moteur, l'arbre étant monté de façon excentrée par rapport à la cloche de protection de sorte que le plan transversal, passant par l'arbre et perpendiculaire à la direction d'excentration de l'arbre par rapport à la cloche de protection, divise la chambre de mixage en une première zone et une deuxième zone, la paroi périphérique de la cloche de protection étant plus proche de l'outil rotatif dans la première zone que dans la deuxième zone, caractérisé en ce que la paroi périphérique de la cloche de protection comporte au moins une ouverture d'aspiration et une ouverture de refoulement, distinctes, disposées dans la deuxième zone de la chambre de mixage.

Selon une autre caractéristique de l'invention, les ouvertures d'aspiration et de refoulement sont disposées sensiblement en vis-à-vis.

Selon une autre caractéristique de l'invention, les ouvertures d'aspiration et de refoulement sont formées par des échancrures réalisées dans la partie inférieure de la paroi périphérique de la cloche de protection.

Selon une autre caractéristique de l'invention, les ouvertures d'aspiration et de refoulement sont délimitées latéralement par des lobes dont le bord inférieur s'étend en dessous du point le plus bas de l'outil rotatif.

Selon une autre caractéristique de l'invention, les échancrures formant les ouvertures d'aspiration et de refoulement débutent sensiblement au niveau du plan transversal de la cloche de protection passant par l'arbre.

Selon encore une autre caractéristique de l'invention, l'outil rotatif comporte un moyeu fixé à l'extrémité de l'arbre se prolongeant d'un côté par un premier couteau s'étendant obliquement vers l'extrémité ouverte de la cloche de protection et un second couteau s'étendant obliquement vers l'extrémité fermée de la cloche de protection, les échancrures remontant sensiblement jusqu'à hauteur du moyeu de l'outil rotatif.

Selon encore une autre caractéristique de l'invention, la paroi périphérique de la cloche de protection comporte des ouvertures supplémentaires présentant une section de passage plus réduite que les sections de passage des ouvertures d'aspiration et de refoulement.

Selon encore une autre caractéristique de l'invention, les ouvertures supplémentaires sont constituées par deux échancrures réalisées dans la partie inférieure de la paroi périphérique de la cloche de protection et disposées en vis-à-vis selon le plan longitudinal de la cloche de protection.

Selon encore une autre caractéristique de l'invention, la surface intérieure de la cloche de protection comporte un élément en relief disposé en amont de l'ouverture d'aspiration par rapport au sens de rotation de l'outil de sorte que la section de passage du flux de mixage est progressivement réduite en amont de l'ouverture d'aspiration.

Selon une autre caractéristique de l'invention, la cloche de protection est de forme générale demi-sphérique.

L'invention concerne également un appareil électroménager comportant un boîtier renfermant un moteur électrique, caractérisé en ce que l'appareil comporte un pied de mixage tel que précédemment décrit.

On comprendra mieux les buts, aspects et avantages de la présente invention, d'après la description donnée ci-après d'un mode particulier de réalisation de l'invention, présenté à titre d'exemple non limitatif, en se référant aux dessins annexés dans lesquels :
- la figure 1 est une vue de côté d'un mixeur ménager muni d'un pied de mixage selon un mode particulier de réalisation de l'invention ;
- la figure 2 est une vue de côté, selon la flèche Il, du pied de mixage de la figure 1 ;
- la figure 3 est une vue de dessous du pied de mixage de la figure 2 ;
- les figures 4 et 5 sont respectivement des vues en coupe longitudinale et transversale selon les lignes IV-IV et V-V de la figure 3 ;
- les figures 6 et 7 sont des vues en perspective du pied de mixage de la figure 2.

Seuls les éléments nécessaires à la compréhension de l'invention ont été représentés. Pour faciliter la lecture des dessins les mêmes éléments portent les mêmes références d'une figure à l'autre.

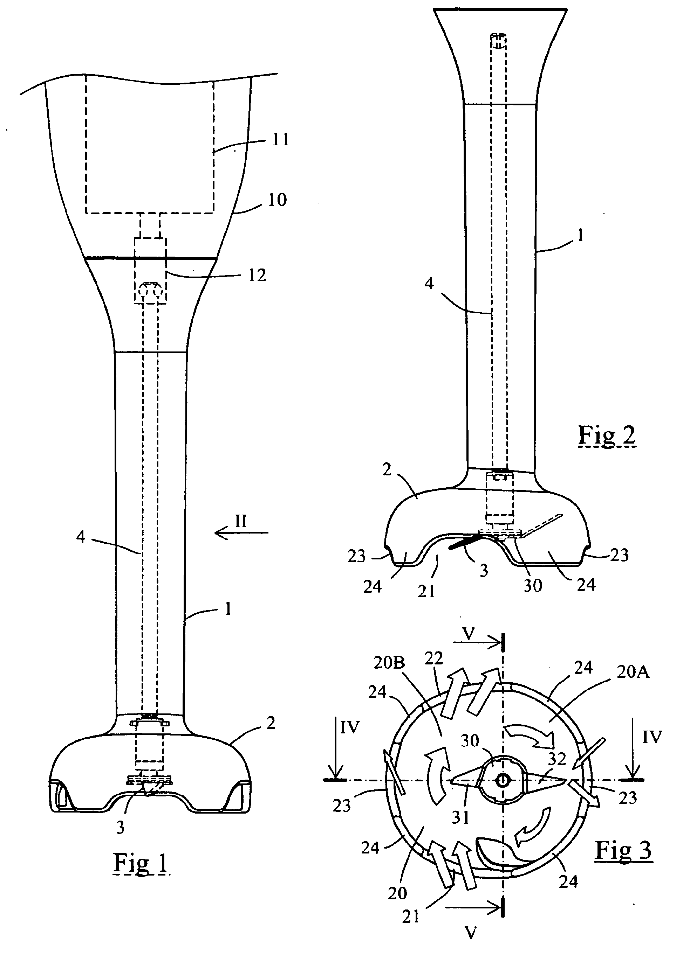

La figure 1 représente un mixeur ménager comportant un boîtier 10 renfermant, de manière connue en soi, un moteur 11 représenté schématiquement en pointillé sur la figure. Le moteur 11 est agencé selon l'axe longitudinal du boîtier 10 et possède un arbre de sortie muni d'un entraîneur rotatif 12 traversant une ouverture pratiquée dans la partie inférieure du boîtier 10.

Sur la partie inférieure du boîtier 10 est monté, de façon amovible ou non, un pied de mixage comprenant un fût tubulaire 1 réalisé avantageusement en acier inox ou en matière plastique, le fût tubulaire 1 ayant une partie supérieure comportant une pièce d'accouplement assurant le montage du pied de mixage sur le boîtier 10.

La partie inférieure du pied de mixage comporte une cloche de protection 2 renfermant un outil de mixage 3 entraîné en rotation par un arbre 4 s'étendant à l'intérieur du fût tubulaire 1 et dont l'extrémité supérieure vient s'accoupler avec l'entraîneur rotatif 12 du boîtier 10.

Conformément aux figures 2 à 5, l'outil de mixage 3 comporte, de manière connue en soi, un moyeu 30 disposé orthogonalement à l'arbre 4 et se prolongeant d'un côté par un premier couteau 31 dirigé vers le bas et de l'autre côté par un second couteau 32 dirigé vers le sommet de la cloche 2, le second couteau 32 étant plus grand que le premier couteau 31.

La cloche de protection 2 comporte avantageusement une paroi périphérique de section sensiblement circulaire, d'un diamètre de l'ordre de 65 mm, et l'arbre 4 est excentré par rapport au centre de la cloche de protection 2, d'environ 5 mm.

La cloche de protection 2 délimite ainsi une chambre de mixage 20 légèrement décalée axialement par rapport à l'outil de mixage 3 de sorte que le plan transversal, représenté par la ligne V-V sur la figure 3, divise la chambre de mixage 20 en une première zone 20A au niveau de laquelle la paroi périphérique de la cloche de protection 2 est relativement proche de l'outil de mixage 3 et une seconde zone 20B dans laquelle la paroi périphérique de la cloche de protection 2 est plus éloignée de l'outil de mixage 3.

Plus particulièrement selon l'invention, la paroi périphérique de la cloche de protection 2 comporte, dans la seconde zone 20B de la chambre de mixage 20, une ouverture d'aspiration 21 et une ouverture de refoulement 22 distinctes. L'ouverture d'aspiration est constituée par une échancrure 21 dont le bord prend naissance à proximité du plan transversal V-V de la cloche de protection 2 et qui s'étend essentiellement dans la seconde zone de la chambre 20, l'échancrure 21 présentant une largeur de l'ordre de 30 mm et une hauteur de l'ordre de 10 mm, le bord supérieur de l'échancrure 21 arrivant sensiblement à hauteur du moyeu 30 de l'outil.

L'ouverture de refoulement est constituée par une échancrure 22 présentant des dimensions semblables à celle de l'échancrure d'aspiration 21 et disposée en vis-à-vis de cette dernière de sorte que les échancrures d'aspiration 21 et de refoulement 22 sont disposées symétriquement par rapport au plan longitudinal représenté par la ligne IV-IV, tout en étant décalées par rapport au plan transversal V-V passant par l'arbre 4.

De manière avantageuse, la cloche de protection 2 comporte également des échancrures secondaires 23 disposées dans l'axe longitudinal de la cloche 2, ces échancrures secondaires 23 possédant une plus faible section de passage que les échancrures d'aspiration 21 et de refoulement 22. A titre d'exemple, les échancrures secondaires présentent une hauteur de l'ordre de 7 mm et une largeur de l'ordre de 25 mm.

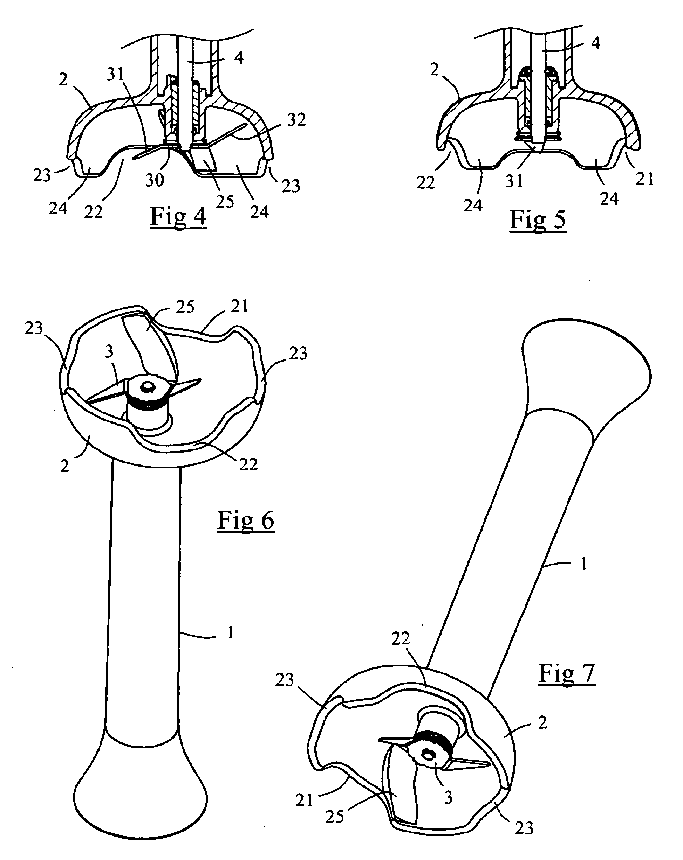

Comme on peut bien le voir sur les figures 4 à 7, la paroi périphérique de la cloche de protection 2 présente, en alternance avec les parties échancrées 21, 22, 23, quatre lobes 24 s'étendant en dessous du niveau de l'outil de mixage 3 et présentant un bord inférieur plat permettant au pied de mixage de reposer en équilibre sur le fond d'un récipient.

Afin d'augmenter le débit du flux entrant dans la cloche de protection 2, la surface intérieure de la cloche de protection 2 comporte préférentiellement un élément en relief, profilé, constituant un déflecteur 25 venant réduire la section de passage du flux de mixage en amont de l'échancrure d'aspiration 21.

Un tel pied de mixage présente l'avantage de procurer une excellente efficacité de mixage, notamment pour les matières alimentaires telles que les carottes. En effet, la rotation de l'outil de mixage génère un important flux de circulation entre les échancrures d'aspiration et de refoulement qui est accentué par la présence du déflecteur, ce dernier réduisant la section de passage et générant, par effet venturi, une dépression provoquant une aspiration favorisant l'entrée du liquide au niveau de l'échancrure d'aspiration.

Le pied de mixage fonctionne donc comme une pompe dans laquelle un flux primaire est aspiré par l'échancrure d'aspiration puis est pour partie rejeté par l'échancrure de refoulement disposée en regard et pour partie dévié vers la première zone de la cloche de protection dans laquelle les matières alimentaires sont mixées entre les lobes et les lames de l'outil de mixage. Le flux de mixage qui s'engage dans la première zone de la cloche de protection subit dans un premier temps une compression, du fait de la restriction progressive de la section de passage, qui favorise le mixage des aliments.

La présence des échancrures secondaires présente l'avantage de réduire l'effet de succion, se produisant lorsque le pied de mixage est appliqué au fond d'un récipient, en permettant à des flux secondaires d'entrer ou de sortir de la cloche d'aspiration, ces échancrures secondaires permettant également d'optimiser le brassage du liquide et donc l'efficacité du mixage.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, dans le cadre de l'invention, telle que définie par les revendications.

Ainsi, dans une variante de réalisation non représentée, la forme de la cloche de protection pourra être oblongue.

Ainsi, dans une autre variante de réalisation le pied de mixage pourra être solidaire du boîtier moteur.

## Revendications

1. Pied de mixage comprenant une cloche de protection (2) comportant une paroi périphérique délimitant une chambre de mixage (20) autour d'un outil rotatif (3), ledit outil rotatif (3) étant solidaire d'un arbre (4) traversant la cloche de protection (2) et destiné à être entraîné par un moteur (11), ledit arbre (4) étant monté de façon excentrée par rapport à la cloche de protection (2) de sorte que le plan transversal, passant par l'arbre (4) et perpendiculaire à la direction d'excentration de l'arbre (4) par rapport à la cloche de protection (2), divise la chambre de mixage (20) en une première zone (20A) et une deuxième zone (20B), la paroi périphérique de la cloche de protection (2) étant plus proche de l'outil rotatif (3) dans la première zone (20A) que dans la deuxième zone (20B), **caractérisé en ce que** la paroi périphérique de la cloche de protection (2) comporte au moins une ouverture d'aspiration (21) et une ouverture de refoulement (22), distinctes, disposées dans la deuxième zone (20B) de la chambre de mixage (20).

2. Pied de mixage (1) selon la revendication 1, **caractérisé en ce que** les ouvertures d'aspiration (21) et de refoulement (22) sont disposées sensiblement en vis-à-vis.

3. Pied de mixage (1) selon l'une quelconque des revendications 1 à 2, **caractérisé en ce que** les ouvertures d'aspiration et de refoulement sont formées par des échancrures (21, 22) réalisées dans la partie inférieure de la paroi périphérique de la cloche de protection (2).

4. Pied de mixage (1) selon l'une quelconque des revendications 1 à 3, **caractérisé en ce que** les ouvertures d'aspiration (21) et de refoulement (22) sont délimitées latéralement par des lobes (24) dont le bord inférieur s'étend en dessous du point le plus bas de l'outil rotatif (3).

5. Pied de mixage (1) selon l'une quelconque des revendications 3 ou 4, **caractérisé en ce que** les échancrures (21, 22) formant les ouvertures d'aspiration et de refoulement débutent sensiblement au niveau du plan transversal de la cloche de protection (2) passant par l'arbre (4).

6. Pied de mixage (1) selon l'une quelconque des revendications 3 à 5, **caractérisé en ce que** ledit outil rotatif (3) comporte un moyeu (30) fixé à l'extrémité de l'arbre se prolongeant d'un côté par un premier couteau (31) s'étendant obliquement vers l'extrémité ouverte de la cloche de protection (2) et un second couteau (32) s'étendant obliquement vers l'extrémité fermée de la cloche de protection (2) et **en ce que** lesdites échancrures (21, 22) remontent sensiblement jusqu'à hauteur du moyeu (30) de l'outil rotatif (3).

7. Pied de mixage (1) selon l'une quelconque des revendications 1 à 6, **caractérisé en ce que** la paroi périphérique de la cloche de protection (2) comporte des ouvertures supplémentaires (23) présentant une section de passage plus réduite que les sections de passage des ouvertures d'aspiration (21) et de refoulement (22).

8. Pied de mixage (1) selon la revendication 7, **caractérisé en ce que** les ouvertures supplémentaires sont constituées par deux échancrures (23) réalisées dans la partie inférieure de la paroi périphérique de la cloche de protection (2) et disposées en vis-à-vis selon le plan longitudinal de la cloche de protection (2).

9. Pied de mixage (1) selon l'une quelconque des revendications 1 à 8, **caractérisé en ce que** la surface intérieure de la cloche de protection (2) comporte un élément en relief (25) disposé en amont de l'ouverture d'aspiration (21) par rapport au sens de rotation de l'outil (3) de sorte que la section de passage du flux de mixage est progressivement réduite en amont de l'ouverture d'aspiration (21).

10. Pied de mixage (1) selon l'une quelconque des revendications 1 à 9, **caractérisé en ce que** la cloche de protection (2) est de forme générale demi-sphérique.

11. Appareil électroménager comportant un boîtier (1) renfermant un moteur électrique, **caractérisé en ce que** ledit appareil comporte un pied de mixage (2) selon l'une quelconque des revendications 1 à 10.

## Claims

1. Blender foot comprising a protective guard (2) comprising a peripheral wall defining a blending chamber (20) around a rotating tool (3), said rotating tool (3) being integral with a shaft (4) passing through the protective guard (2) and capable of being driven by a motor (11), said shaft (4) being mounted off-centre in relation to the protective guard (2) in such a way that the transverse plane, passing through the shaft (4) and perpendicular to the direction of eccentricity of the shaft (4) in relation to the protective guard (2), divides the blending chamber (20) into a first zone (20A) and a second zone (20B), the peripheral wall of the protective guard (2) being closer to the rotating tool (3) in the first zone (20A) than in the second zone (20B), **characterised in that** the peripheral wall of the protective guard (2) comprises at least one intake opening (21) and one discharge opening (22), which are separate, arranged in the second zone (20B) of the blending chamber (20).

2. Blender foot (1) according to claim 1, **characterised in that** the intake (21) and discharge (22) openings are arranged approximately facing each other.

3. Blender foot (1) according to any one of claims 1 to 2, **characterised in that** the intake and discharge openings are formed by recesses (21, 22) made in the lower part of the peripheral wall of the protective guard (2).

4. Blender foot (1) according to any one of claims 1 to 3, **characterised in that** the intake (21) and discharge (22) openings are laterally defined by lobes (24) the lower edge of which extends below the lowest point of the rotating tool (3).

5. Blender foot (1) according to any one of claims 3 or 4, **characterised in that** the recesses (21, 22) forming the intake and discharge openings start approximately at the level of the transverse plane of the protective guard (2) passing through the shaft (4).

6. Blender foot (1) according to any one of claims 3 to 5, **characterised in that** said rotating tool (3) comprises a hub (30) attached to the end of the shaft running on one side into a first blade (31) extending obliquely towards the open end of the protective guard (2) and a second blade (32) extending obliquely towards the closed end of the protective guard (2) and **in that** said recesses (21, 22) extend approximately to the height of the hub (30) of the rotating tool (3).

7. Blender foot (1) according to any one of claims 1 to 6, **characterised in that** the peripheral wall of the protective guard (2) comprises additional openings (23) having a smaller flow area than the flow areas of the intake (21) and discharge (22) openings.

8. Blender foot (1) according to claim 7, **characterised in that** the additional openings are made up of two recesses (23) made in the lower part of the peripheral wall of the protective guard (2) and arranged facing each other along the longitudinal plane of the protective guard (2).

9. Blender foot (1) according to any one of claims 1 to 8, **characterised in that** the inner surface of the protective guard (2) comprises a protruding component (25) arranged before the intake opening (21) in relation to the direction of rotation of the tool (3) in such a way that the blending flow area is progressively reduced before the intake opening (21).

10. Blender foot (1) according to any one of claims 1 to 9, **characterised in that** the protective guard (2) has a generally hemispherical shape.

11. Electric household appliance comprising a housing (1) containing an electric motor, **characterised in that** said appliance comprises a blender foot (2) according to any one of claims 1 to 10.

## Patentansprüche

1. Mixstab, umfassend eine Schutzglocke (2) mit einer umlaufenden Wand, die eine Mixkammer (20) rund um ein Drehwerkzeug (3) begrenzt, wobei das Drehwerkzeug (3) fest mit einer Welle (4) verbunden ist, die die Schutzglocke (2) durchdringt und dafür bestimmt ist, von einem Motor (11) angetrieben zu werden, wobei die Welle (4) in Bezug auf die Schutzglocke (2) exzentrisch befestigt ist, so dass die Transversalebene, die durch die Welle (4) und senkrecht zur Exzentrizitätsrichtung der Welle (4) in Bezug auf die Schutzglocke (2) verläuft, die Mixkammer (20) in eine erste Zone (20A) und eine zweite Zone (20B) teilt, wobei die umlaufende Wand der Schutzglocke (2) dem Drehwerkzeug (3) in der ersten Zone (20A) näher ist als in der zweiten Zone (20B), **dadurch gekennzeichnet, dass** die umlaufende Wand der Schutzglocke (2) mindestens eine Saugöffnung (21) und eine Drucköffnung (22) umfasst, die verschieden und in der zweiten Zone (20B) der Mixkammer (20) angeordnet sind.

2. Mixstab (1) nach Anspruch 1, **dadurch gekennzeichnet, dass** die Saug- (21) und Drucköffnungen (22) im Wesentlichen gegenüberliegend angeordnet sind.

3. Mixstab (1) nach einem der Ansprüche 1 bis 2, **dadurch gekennzeichnet, dass** die Saug- und Drucköffnungen von Ausschnitten (21, 22) gebildet werden, die im unteren Teil der umlaufenden Wand der Schutzglocke (2) ausgeführt sind.

4. Mixstab (1) nach einem der Ansprüche 1 bis 3, **dadurch gekennzeichnet, dass** die Saug- (21) und Drucköffnungen (22) seitlich von Lappen (24) begrenzt sind, deren unterer Rand sich unterhalb des tiefsten Punktes des Drehwerkzeugs (3) erstreckt.

5. Mixstab (1) nach einem der Ansprüche 3 oder 4, **dadurch gekennzeichnet, dass** die Ausschnitte (21, 22), die die Saug- und Drucköffnungen bilden, im Wesentlichen auf Höhe der Transversalebene der Schutzglocke (2), die durch die Welle (4) verläuft, beginnen.

6. Mixstab (1) nach einem der Ansprüche 3 bis 5, **dadurch gekennzeichnet, dass** das Drehwerkzeug (3) eine Nabe (30) umfasst, die am Ende der Welle befestigt ist und auf einer Seite von einem ersten Messer (31) verlängert wird, das sich schräg in Richtung offenes Ende der Schutzglocke (2) erstreckt, und einem zweiten Messer (32), das sich schräg in Richtung geschlossenes Ende der Schutzglocke (2) erstreckt, und dadurch, dass die Ausschnitte (21, 22) im Wesentlichen bis zur Höhe der Nabe (30) des Drehwerkzeugs (3) hinaufreichen.

7. Mixstab (1) nach einem der Ansprüche 1 bis 6, **dadurch gekennzeichnet, dass** die umlaufende Wand der Schutzglocke (2) Zusatzöffnungen (23) umfasst, die einen Durchlaufbereich aufweisen, der kleiner ist als die Durchlaufbereiche der Saug- (21) und Drucköffnungen (22).

8. Mixstab (1) nach Anspruch 7, **dadurch gekennzeichnet, dass** die Zusatzöffnungen von zwei Ausschnitten (23) gebildet werden, die im unteren Teil der umlaufenden Wand der Schutzglocke (2) ausgeführt und gegenüberliegend gemäß der Längsebene der Schutzglocke (2) angeordnet sind.

9. Mixstab (1) nach einem der Ansprüche 1 bis 8, **dadurch gekennzeichnet, dass** die Innenfläche der Schutzglocke (2) ein reliefartiges Element (25) umfasst, das der Saugöffnung (21) in Bezug auf die Drehrichtung des Werkzeugs (3) vorgelagert ist, so dass der Durchlaufbereich des Mixflusses vor der Saugöffnung (21) progressiv verringert wird.

10. Mixstab (1) nach einem der Ansprüche 1 bis 9, **dadurch gekennzeichnet, dass** die Schutzglocke (2) im Allgemeinen halbkugelförmig ist.

11. Elektrohaushaltsgerät, umfassend ein Gehäuse (1), das einen Elektromotor einschließt, **dadurch gekennzeichnet, dass** das Gerät einen Mixstab (2) nach einem der Ansprüche 1 bis 10 umfasst.
